# EUROPEAN PATENT APPLICATION

(11) **EP 4 686 694 A1**
(43) Date of publication of application: **04.02.2026**
(21) Application number: 25191382.8
(22) Date of filing: 23.07.2025
(51) Int. Cl.: B66F 9/075, B60R 16/02, B66F 9/20, H02G 3/32

(54) **INDUSTRIAL TRUCK INCLUDING IMPROVED CABLE RESTRAINT ELEMENT**

(30) Priority: 30.07.2024 IT 202400017734
(71) Applicant: Toyota Material Handling Manufacturing Italy S.p.A, 40132 Bologna (IT)
(72) Inventor: DELIZIOSI GIORDANO, Simone, 40128 Bologna (IT); VALDISERRI, Patrick, 40132 Bologna (BO) (IT)
(74) Representative: Hoffmann Eitle

(57) **Abstract**

An electrically powered industrial truck comprising: control means, an energy storage system (97), one or more electric drives powered by the energy storage system, a plurality of cables (13, 14, 15) to connect the control means to the one or more electric drives, a constraining element (10) suitable to constrain the position of one portion of each of the plurality of cables. The constraining element (10) comprises a plurality of seats (11, 12), each seat being suitable to receive a plurality of said cables (13, 14, 15); each seat (11, 12) being provided with: a portion of restraint (18, 19) of the cables to restrain the cables in an operational position, and a portion of entry (16, 17) of the cables to allow the entry of the cables in the restraint portion (18, 19) in a direction transverse to a longitudinal axis of the cable (13, 14, 15) during an assembly of the cables (13, 14, 15) in the seat. The entry portion (16, 17) is shaped so that it does not allow the cables (13, 14, 15) received in the restraint portion (18, 19) to exit the seat during the normal operation of the industrial truck.

## Description

### Field of the invention

The present invention relates to an industrial truck of the electrically powered type provided with one or more cable constraining elements.

### Technical background

It is known in the art to make industrial trucks, to be used for example at industrial sites, ports, warehouses or the like. The industrial trucks can include material handling means, such as a fork, a gripper or another device for picking up a load, for example a pallet, a reel or any other known type of load. A very widespread type of industrial truck is the forklift truck.

In recent years, electrically powered industrial trucks have become widespread, powered for example by a lithium battery assembled on the truck. In electric-type forklift trucks, a large number of cables must be assembled inside the frame to power and send the controls to the different electric drives present on the forklift truck, for example the traction motors and the hydraulic pump necessary to feed oil to the hydraulic drives of the lifting or material handling system.

Furthermore, different types of industrial trucks can be produced with different frame layouts and wiring necessary for controlling all the electric drives. Depending on the type of layout, a different number of cables can be provided for controlling and powering the electric drives.

Furthermore, the cables carrying the control signals are delicate components that could be cut or damaged during the operation of the industrial truck, with an associated risk of fire. For this reason, the positioning of the cables inside the frame of the truck must be precise and guaranteed in a secure manner. Furthermore, the cables must be placed and clamped in the appropriate position quickly in order to reduce the times and costs associated with the assembly of the truck.

The problem therefore arises of providing a system which allows to guarantee the correct positioning of a variable number of cables inside an industrial truck in a reliable and safe manner, regardless of the type of layout of the industrial truck. The problem also arises of allowing an easy, quick and safe assembly of the cables in a desired and appropriate position inside the industrial truck. The problem also arises of guaranteeing the correct placement of the cables inside the industrial truck in order to reduce the risk of damage to the cables and related fire during the operation of the truck.

### Summary of the invention

In light of the problems highlighted above, the present disclosure provides an electrically powered industrial truck comprising:
- control means,
- an energy storage system,
- one or more electric drives powered by the energy storage system,
- a plurality of cables to connect the control means to the one or more electric drives,
- at least one constraining element suitable to constrain the position of one portion of each of the plurality of cables;
characterized in that the constraining element comprises a plurality of seats, each seat being suitable to receive a plurality of said cables; each seat being provided with:
- a portion of restraint of the cables to restrain the cables in an operational position, and
- a portion of entry of the cables to allow the entry of the cables in the restraint portion in a direction transverse to a longitudinal axis of the cable during the assembly of the cables in the seat,
wherein said entry portion is shaped so that it does not allow the cables received in the restraint portion to exit the seat during the normal operation of the industrial truck.

Preferably, at least one or more among the restraint portions of the plurality of seats is configured to restrain two or more cables, preferably three or more cables, more preferably to restrain two to three cables.

Preferably, one or more among the restraint portions of the plurality of seats has a width (L1) in a first direction transverse to a longitudinal axis of the cable and a height (h) in a second direction transverse to the longitudinal axis of the cable, wherein the ratio of the width (L1) to the height (h) is within a range between 2 and 4.

Preferably, the constraining element comprises a platelike body which forms a closed extremity of the plurality of seats, and a plurality of ledges which extend transverse to the platelike body; each of said seats being formed between a pair of ledges. Preferably, the ledges are connected to the platelike body at a first extremity and are provided with a folded portion at a second extremity opposite the first extremity.

Preferably, at least one ledge contributes to forming two of the plurality of seats with two of its opposite sides.

Preferably, the ledges comprise a first section which forms the restraint portion and a second section which forms the entry portion, said first and second sections being inclined to each other, preferably by an angle (α) comprised between 170° and 140°, more preferably by an angle comprised between 160° and 150°.

Preferably, the second section of the ledge has a length (L2) in a direction of entry of the cable into the respective seat that is within a range between 10% and 50% of a length (L1) of the first section in the direction of entry of the cable into the respective seat, preferably in a range between 20% and 40% of the length (L1) of the first section.

Preferably, the restraint portion has a height (h) substantially corresponding to a diameter of the cables.

Preferably, the ledges have substantially the same shape as each other, wherein the respective first and second sections are substantially parallel to each other.

Preferably, the constraining element comprises holes for the fastening to a frame of the industrial truck, said holes being placed on parts of the constraining element that do not form the plurality of seats.

Preferably, the one or more electric drives comprise two electric traction motors and an electric motor associated with a hydraulic pump, wherein the plurality of cables comprises at least three cables for each traction motor and three cables for the motor associated with the hydraulic pump.

Preferably, the constraining element includes three seats. Preferably, the constraining element includes two seats.

Preferably, the control means are assembled near a rear portion of a frame of the industrial truck, and the electric drives are assembled near a front axle of the industrial truck.

Preferably, the constraining element is fastened to the frame of the industrial truck. Preferably, a constraining element is fastened to a wall of the frame which forms a battery-holder compartment. Preferably, a constraining element is fastened to a wall of the frame that forms a housing compartment of a hydraulic pump, preferably a hydraulic pump for feeding material handling means of the industrial truck.

Preferably, the industrial truck includes a plurality of constraining elements. Preferably, the constraining elements are assembled inside the frame of the industrial truck.

Thanks to the present disclosure, it is possible to quickly and easily assemble a plurality of cables inside the industrial truck. The assembly of the cables can occur in the presence of different layouts, that is, both if a large number of cables must be installed, and if a limited number of cables must be installed. The cables are stably and securely restrained in their respective seats. The compact structure of the constraining elements allows to reduce the dimensions and to be able to manage a large number of cables with a small number of components.

### Brief description of the drawings

The present disclosure will be illustrated with reference to exemplary embodiments described with reference to the accompanying drawings.

In the drawings:
- Figure 1 illustrates an electrically powered industrial truck;
- Figure 2 illustrates a frame of an industrial truck with the cables installed for controlling the electric drives, where the electric drives have been removed;
- Figure 3 illustrates the control means, the electric drives and the relative cables, where the frame has been removed;
- Figure 4 illustrates a detail of Figure 2;
- Figures 5 -7 illustrate a first embodiment of a constraining element;
- Figures 8-9 illustrate a second embodiment of a constraining element.

### Detailed description

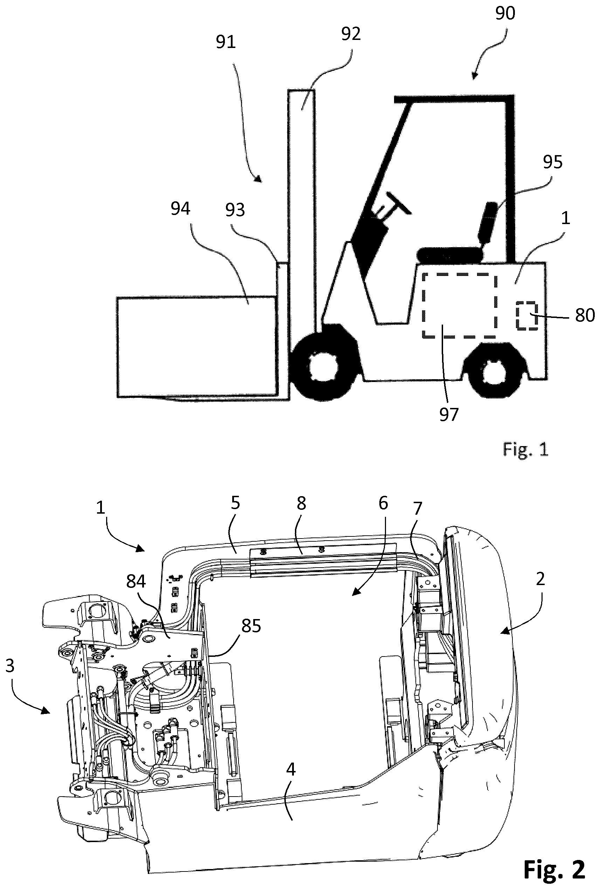

With reference to the figures, an industrial truck 90 is schematically shown in Figure 1. The industrial truck 90 can be used in an industrial site, a port, a warehouse or the like. The industrial truck can be used to handle a load 94. For this purpose, the industrial truck 90 can include material handling means 91. For example, the industrial truck 90 can be a forklift truck, preferably a counterbalanced forklift truck. The forklift truck 90 can include an upright 92 on which a material handling device 93, for example a fork, can slide. Other types of material handling devices can also be used, such as a gripper, a strut, a slab material handling device or other. The industrial truck 90 preferably includes a cab for a driver. The industrial truck preferably includes a seat 95 for the user of the industrial truck. The industrial truck 90 includes control means 80, preferably capable of controlling the functions of locomotion and/or material handling. The industrial truck 90 includes a frame 1. The industrial truck 90 can for example include three or four wheels, but other configurations are also possible according to the prior art. The industrial truck 90 can include a front axle and a rear axle as shown in Figure 1.

The industrial truck 90 is electrically powered and comprises an electrical energy storage system (or storage) 97, such as an electric battery, an assembly of electric batteries or a battery pack made according to any known technique. The electrical energy storage system 97 is located within the frame 1 of the industrial truck 90; in an example, the electrical energy storage system 97 is located below, at least in part, a driver's station, as shown in Figure 1. The electrical energy storage system 97 is positioned in a seat (or battery compartment, or battery-holder compartment) in the frame 1. The electrical energy storage system 97 can preferably comprise a lithium (or lithium-ion) battery. However, other types of batteries can also be used according to known techniques, such as lead-acid, nickel-metal hydride or nickel-metal hydride batteries. Preferably, the electrical energy storage system 97 is configured to supply electric power to a locomotion system of the industrial truck and/or the material handling system of the industrial truck. Preferably, the locomotion system of the industrial truck 90 includes one or more electric motors (not shown in Figure 1); preferably the material handling system includes one or more electric drives, hydraulic drive systems, an electrically driven hydraulic pump, linear electric drives or other types of drives according to the known techniques in the field. The energy storage system 97 could be removable from the industrial truck 90, for example to allow the replacement of the discharged battery with a pre-charged battery; in this case, the frame could include an opening for the removal/insertion of the energy storage system, for example on a side of the industrial truck; alternatively, the energy storage system could also not be removable from the industrial truck, i.e. be integrated in the frame in a fixed manner.

The industrial truck 90 can be fully electrically powered by means of the electrical energy storage system 97, but could also be of the hybrid type, i.e. of the type comprising a combustion engine in addition to the electrical energy storage system 97.

With reference to Figures 2 to 4, the industrial truck 90 includes a plurality of cables 7 to connect the control means 80 to the one or more electric drives 81, 82, 83 of the industrial truck. In the example shown in Figures 2-4, the industrial truck includes a frame 1 provided with a rear portion 2, a front portion 3 and two side portions 4 and 5 connecting the rear portion 2 to the front portion 3. The rear portion 2 can for example form a counterweight in the case of a counterbalanced truck. The front portion 3 is intended to support the front axle of the truck and, if present, the material handling means, which can comprise for example the above-described upright 92 of a forklift truck. The frame 1 can advantageously form a seat 6 for housing the energy storage means in a central position. In an embodiment according to Figure 2, the seat 6 of the battery is open laterally, for example to allow the replacement of the battery by means of lateral extraction/insertion. In this embodiment, the lateral portion of the frame 5 can have an overturned U-shape, so as to allow the insertion of a fork under the battery (not shown in Figure 2) for the extraction/insertion thereof in the seat.

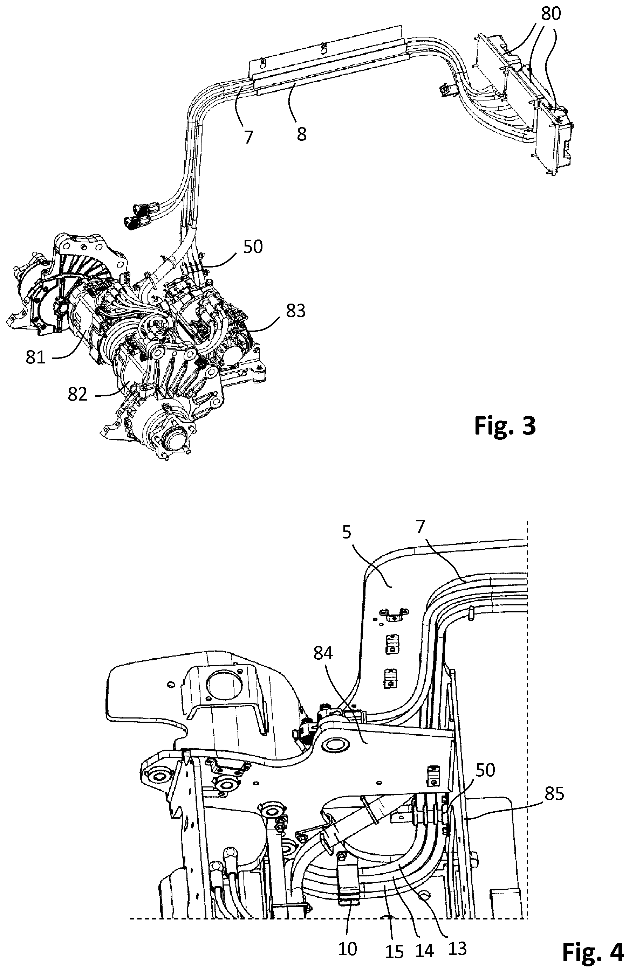

The one or more electric drives comprise two traction electric motors 81, 82 and an electric motor 83 associated with a hydraulic pump; however, depending on the applications, a different number of electric drives could also be provided; for example, a single electric motor could be provided for traction. For example, the electric traction motors 81, 82 can be assembled at a front axle of the industrial truck, as depicted in Figure 3, at the front portion 3 of the frame 1. The electric motor associated with the hydraulic pump 83 can also be positioned near a front axle of the industrial truck, at the front portion 3 of the frame. The control means 80 can be assembled at the rear end 2 of the frame 1. The cables 7 connect the control means 80 to the electric drives 81, 82 and 83. In an embodiment, the cables 7 slide along the upper crossbar of the side portion 5 of the frame 1, for example supported by a shelf 8 of elongated shape and assembled horizontally on the upper crossbar of the side portion 5 of the frame 1.

In an embodiment, the plurality of cables 7 comprises eleven cables comprising three cables for each traction motor 81, 82, three cables for the motor 83 associated with the hydraulic pump, and two cables for powering the commands connected to the battery. For example, the cables 7 can preferably carry control signals from the control means 80 to a power electronics module associated with the electric drives 81, 82, 83. The control means 80 can be configured to control the supply of electrical energy from the energy storage system to the plurality of electric drives 81, 82, 83.

The industrial truck 90 includes one or more constraining elements 10, 50, suitable to constrain the position of one portion of each of the plurality of cables 7. Each constraining element can constrain the position of one portion of a cable or of several cables. In the example in the figure, two constraining elements 10, 50 are provided. Thanks to such a configuration, each cable can be constrained in two different points. The constraining element 10 is fastened to the frame 1 of the industrial truck, preferably at the front part 3 of the frame. The constraining element 10 is preferably fastened to the frame 1 inside the industrial truck.

Preferably, the constraining element 10 is fastened to a wall 84 of the frame (Fig. 4) which forms a housing of the electric drive 83 associated with the hydraulic pump. Preferably, the wall 84 is substantially vertical and oriented along a plane substantially parallel to a longitudinal direction of the industrial truck (i.e. a direction which goes from the rear axle to the front axle). The constraining element 50 is fastened to a wall 85 of the frame 1 which forms the battery compartment 6. That is, the wall 85 delimits the battery compartment 6, preferably forms the front wall of the battery compartment 6.

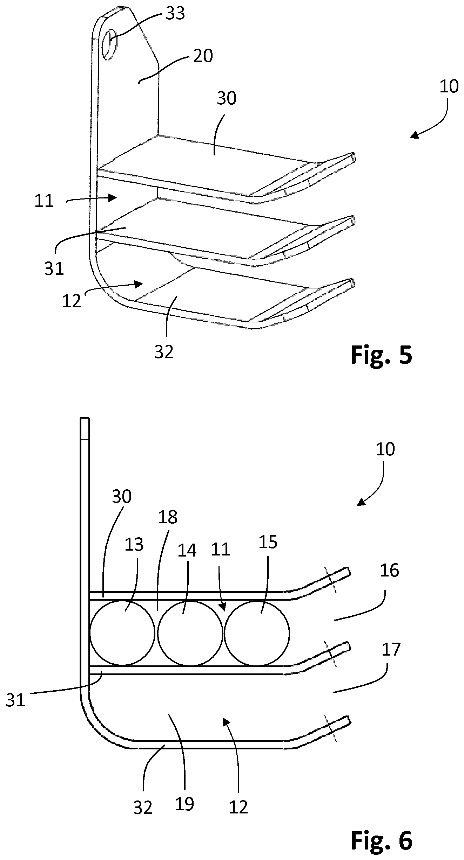

As clearly depicted in Figures 5-7, the constraining element 10 comprises a plurality of seats 11, 12 (preferably two seats), where each seat 11, 12 is suitable to receive a plurality of said cables 7, for example three cables 13, 14, 15 of the plurality of cables 7.

The seat 11 is provided with:
- a portion of restraint 18 of the cables to restrain the cables in an operational position, and
- a portion of entry 16 of the cables to allow the entry of the cables in the restraint portion 18 in a direction transverse to a longitudinal axis of the cable 13, 14, 15 during the assembly of the cables 13, 14, 15 in the seat.

Similarly, the seat 12 is provided with:
- a portion of restraint 19 of the cables to restrain the cables in an operational position, and
- a portion of entry 17 of the cables to allow the entry of the cables in the restraint portion 19 in a direction transverse to a longitudinal axis of the cable during the assembly of the cables in the seat.

The entry portion 16, 17 of each seat 11, 12 is shaped so that it does not allow the cables 13, 14, 15 received in the restraint portion 18, 19 to exit the seat during the normal operation of the industrial truck. That is, the entry portion 16, 17 traps the cables inside the restraint portion, guaranteeing the secure fastening of the cables 7 in the correct position inside the frame 1. The entry portion 16, 17 has a width less than the restraint portion 18, 19, when the cables are received in the restraint portion 18, 19. Preferably, the entry portion 16, 17 can elastically expand to allow the entry of the cables into the restraint portion 18, 19 under the pressure exerted by an assembly operator.

When the cables 13-15 are received in the restraint portion 18, 19, the entry portion 16, 17 can elastically return to the initial narrower configuration which does not allow the cables to exit from the constraining element 10. Alternatively, the entry portions 16, 17 could be substantially rigid, and the insertion of the cables 13, 14, 15 into the restraint seats can occur by exploiting a minimum deformation of the cable, for example of its rubber sheath. In any case, the width of the entry portion is preferably less than the width of the restraint portion in an operational condition so as to firmly restrain the cable in the correct position, while avoiding stresses on the cable itself during the normal operational condition.

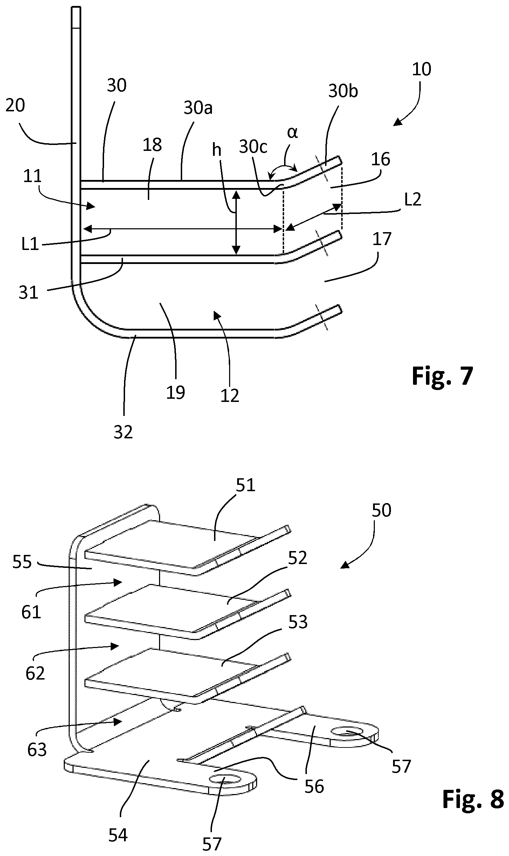

Preferably, the restraint portions 18, 19 of the plurality of seats 11, 12 are configured to restrain two or more cables, preferably three cables. In the example in Figures 5-7, each restraint portion 18, 19 can restrain three cables, see Figure 6. In the case of the embodiment of the constraining element of Figure 8-9, a restraint portion of a seat is configured to restrain only two cables.

Preferably, as clearly shown in Figure 7, the restraint portions 18, 19 of the plurality of seats 11, 12 have a width L1 in a first direction transverse to a longitudinal axis of the cable and a height h in a second direction transverse to the longitudinal axis of the cable.

Preferably, the ratio of the width L1 to the height h is within a range between 2 and 4. Advantageously, the restraint portion 18, 19 has a height h (corresponding to the distance between two ledges 30, 31 or 31, 32) substantially corresponding to a diameter of the cables 13, 14, 15; in this manner the cables can be housed firmly, but without being permanently deformed in their transverse section and without being excessively stressed in compression.

Advantageously, the constraining element 10 comprises a platelike body 20 which form a closed extremity of the plurality of seats 11, 12, and a plurality of ledges 30, 31, 32 which extend transverse to the platelike body 20. Each of said seats 11, 12 is preferably formed between a pair of ledges 30, 31, 32. Preferably, at least one ledge 31 contributes to forming two of the plurality of seats 11, 12 with two of its opposite sides. It is thereby possible to obtain a compact configuration of a constraining element capable of accommodating a large number of cables in different seats.

Preferably, the ledges 30, 31, 32 comprise a first section 30a which forms (or contributes to forming) the restraint portion 18 and a second section 30b which forms (or contributes to forming) the entry portion 16; the first and second sections 30a and 30b are inclined to each other, preferably by an angle α comprised between 170° and 140°, more preferably by an angle comprised between 160° and 150°. That is, the first and second sections 30a and 30b do not lie on the same plane. The first and second sections 30a and 30b are substantially straight according to an embodiment and are connected to each other by a curved portion 30c. This configuration allows to reduce the distance between the two ledges that form a seat at the entry portion 16, 17, thus making it possible to securely clamp the cables once received in the restraint portions 18, 19. That is, the distance between two adjacent ledges is greater at the restraint portion than the distance between the two ledges at the entry portion.

Preferably, the second section 30b of the ledge 31 has a length L2 in a direction of entry of the cable into the respective seat that is within a range between 10% and 50% of the length L1 of the first section 30a in the direction of entry of the cable into the respective seat, preferably in a range between 20% and 40% of the length L1 of the first section 30a.

In a preferred embodiment, the ledges 30, 31, 32 have substantially the shape as each other, and the respective first and second sections are substantially parallel to each other. Preferably, the ledges 30, 31, 32 are substantially perpendicular to the platelike body 20, at least in the part forming the restraint portion.

In the embodiment of Figures 5-7, the constraining element 10 has two seats 11, 12 intended to accommodate cables. However, in alternative embodiments, such as the one illustrated in Figure 8-9, the constraining element 50 can include three seats suitable to receive a plurality of cables. It is also possible to make the constraining element so as to include a greater number of seats.

Advantageously, the constraining element 10, 50 comprises one or more holes for the fastening to a frame of the industrial truck, said holes being placed on parts of the constraining element that do not form the plurality of seats 11, 12. In the case of the constraining element 10, there is a fastening hole 33 of the constraining element to the frame, for example by means of a screw and a bolt. The fastening hole 33 is formed on a portion of the platelike body 20 which protrudes with respect to the seats 11, 12.

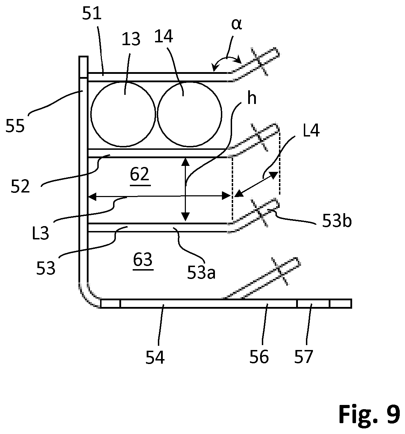

With reference to Figures 8-9, another type of constraining element 50 is described. The constraining element can be installed in addition to the constraining element 10 on the industrial truck 90. The constraining element 50 includes three seats 61, 62, 63 suitable to receive cables. Each of the seats 61-63, similarly to the constraining element 10, includes a portion of restraint of the cables in which the cables are restrained during the operation of the truck, and an entry portion for the entry of the cables into the restraint portion in a direction transverse to the extension of the cable. Preferably, each seat 61, 62, 63 is suitable to receive two cables 13, 14. The cables can be, at least in part, the same cables received in the constraining element 10. The constraining element 50 includes a platelike body 55, which forms a closed extremity of the seats 61, 62, 63. Four ledges 51-54 project from the platelike body 55. The ledges 51-54 are substantially perpendicular to the platelike body 55. Two flanges 56 extend from a ledge 54 which forms the lowermost seat of the constraining element, on which holes 57 are formed for fastening the constraining element 50 to the frame of the industrial truck. The flanges 56 can preferably extend to the sides of the inclined section of the ledge 54 that forms the entry portion of the seat 63. As shown in Figure 9, the ledges 51, 52, 53 and 54, similarly to the constraining element 10, include a first section 53a which forms the portion of restraint of the cables (in which the cables are restrained during the operation of the truck) and a second section 53b which forms the portion of entry of the cable in the seat. The second section 53b is inclined by an angle α with respect to the first section 53a. The angle α can have values similar to those already described above for the constraining element 10. The length L4 of the second portion 53b can be equal to about the diameter of the cable 13, 14, for example in a range equal to 70%-130% of the diameter of the cable; this relationship can also be valid for the length L2 of the second section 30b in the constraining element 10. The ratio of the length L3 to the height h in the case of the constraining element 50 can be within a range 2-2,5. The height h can be substantially equal to the diameter of the cable 13, 14, in a manner similar to that described for the constraining element 10. The constraining element 50 is configured to constrain six cables, in a manner similar to the constraining element 10. However, the constraining element 50 houses the cables on three seats, while the constraining element 10 on only two seats. Even in the case of the constraining element 50, the ledges 51-54 can advantageously have sufficient elasticity to allow the widening of the entry potion (opposite to the body 55) during the assembly of the cables to allow the entry of the cables into the restraint portion of the respective seat. The widening of the inclined portions 53b (the other ledges 51-54 include corresponding inclined sections) is induced by a pressure exerted by the assembly operator pushing the cable inside the seat 61-63. When the cable enters the restraint portion of the seat, the ledges elastically return to the initial position, reducing the distance between the inclined portions 53b and thus guaranteeing the trapping of the cables in the restraint portions of the seats 61-63. Alternatively, the ledges 51-54 can also be substantially rigid, and during the insertion of the cable into the respective seat it is possible to slightly deform the cable section to force it into the constrained position.

In light of the above description, it is clear how the objects of the present disclosure have been achieved. In particular, thanks to the constraining elements described above, it is possible to quickly, easily and safely ensure the position of the cables inside the truck. Different configurations and layouts can be conceived by reducing the dimensions and having the possibility of constraining a large and variable number of cables.

## Claims

1. An electrically powered industrial truck comprising:
- control means (80),
- an energy storage system (97),
- one or more electric drives (81, 82, 83) powered by the energy storage system,
- a plurality of cables (13, 14, 15) to connect the control means to the one or more electric drives,
- at least one constraining element (10, 50) suitable to constrain the position of one portion of each of the plurality of cables;
**characterized in that** the constraining element (10) comprises a plurality of seats (11, 12), each seat being suitable to receive a plurality of said cables (13, 14, 15); each seat (11, 12) being provided with:
- a portion of restraint (18, 19) of the cables to restrain the cables in an operational position, and
- a portion of entry (16, 17) of the cables to allow the entry of the cables in the restraint portion (18, 19) in a direction transverse to a longitudinal axis of the cable (13, 14, 15) during the assembly of the cables (13, 14, 15) in the seat, wherein said entry portion (16, 17) is shaped so that it does not to allow the cables (13, 14, 15) received in the restraint portion (18, 19) to exit the seat during the normal operation of the industrial truck.

2. An industrial truck according to claim 1, wherein at least one or more among the restraint portions (18, 19) of the plurality of seats is configured to restrain two or more cables, preferably three cables or more.

3. An industrial truck according to one or more of the previous claims, wherein one or more among the restraint portions (18, 19) of the plurality of seats has a width (L1) in a first direction transverse to a longitudinal axis of the cable and a height (h) in a second direction transverse to the longitudinal axis of the cable, wherein the ratio of the width (L1) to the height (h) is within a range between 2 and 4.

4. An industrial truck according to one or more of the previous claims, wherein the constraining element comprises a platelike body (20) which forms a closed extremity of the plurality of seats (11, 12), and a plurality of ledges (30, 31, 32) which extend transverse to the platelike body (20); each of said seats (11, 12) being formed between a pair of ledges (30, 31, 32).

5. An industrial truck according to claim 4, wherein at least one ledge (31) contributes to forming two of the plurality of seats (11, 12) with two of its opposite sides.

6. An industrial truck according to one or more of claims 3 to 5, wherein the ledges (30) comprise a first section (30a) which forms the restraint portion and a second section (30b) which forms the entry portion (30b), said first and second sections being inclined to each other, preferably by an angle (α) comprised between 170° and 140°, more preferably by an angle comprised between 160° and 150°.

7. An industrial truck according to claim 6, wherein the second section (30b) of the ledge has a length (L2) in a direction of entry of the cable into the respective seat that is within a range between 10% and 50% of a length (L1) of the first section (30a) in the direction of entry of the cable into the respective seat, preferably in a range between 20% and 40% of the length (L1) of the first section (30a).

8. An industrial truck according to one or more of the previous claims, wherein the restraint portion (18, 19) has a height (h) substantially corresponding to a diameter of the cables (13, 14, 15).

9. An industrial truck according to one or more claims 6 to 8, wherein the ledges (30, 31, 32) have substantially the same shape as each other, wherein the respective first and second sections are substantially parallel to each other.

10. An industrial truck according to one or more of the previous claims, wherein the constraining element (10) comprises holes for the fastening to a frame of the industrial truck, said holes being placed on parts of the constraining element that do not form the plurality of seats (11, 12).

11. An industrial truck according to one or more of the previous claims, wherein the one or more electric drives comprise two electric traction motors and a motor associated with a hydraulic pump, wherein the plurality of cables comprises at least three cables for each traction motor and three cables for the motor associated with the hydraulic pump.

12. An industrial truck according to one or more of the previous claims, wherein the constraining element is fastened to a frame of the industrial truck.

13. An industrial truck according to one or more of the previous claims, wherein the control means (80) are mounted near a rear portion of a frame of the industrial truck, and the electric drives (81, 82, 83) are mounted near a front axle of the industrial truck.
